# FASCICULE DE BREVET EUROPEEN

(11) **EP 3 890 566 B1**
(45) Date de publication et mention de la délivrance du brevet: **18.09.2024**
(21) Numéro de dépôt: 19813546.9
(22) Date de dépôt: 05.12.2019
(51) Int. Cl.: A47J 27/04

(54) **ACCESSOIRE CUISEUR VAPEUR AVEC CONDUIT DE VAPEUR DÉCALÉ**
DAMPFKOCHER-ZUBEHÖR MIT EINEM VERSETZTEM DAMPFKANAL
STEAM COOKER ACCESSORY WITH AN OFFSET STEAM DUCT

(30) Priorité: 07.12.2018 FR 1872521
(43) Date de publication de la demande: 13.10.2021
(73) Titulaire: SEB S.A., 69130 Ecully (FR)
(72) Inventeur: ALLEMAND, Bernard, 70100 VELESMES ECHEVANNE (FR); FRADET, Gautier, 21120 ECHEVANNES (FR)
(74) Mandataire: SEB Développement
(86) Numéro de dépôt international: PCT/EP2019/083887
(87) Numéro de publication internationale: WO 2020/115243

(56) Documents cités:
- FR-A1- 2 846 216
- FR-A1- 3 051 647
- FR-A5- 2 161 447
- FR-B1- 3 051 647
- US-A1- 2004 020 374

## Description

### Domaine technique

La présente invention concerne le domaine technique des appareils et dispositifs de production de vapeur pour chauffer et/ou cuire des aliments à la vapeur.

La présente invention concerne plus particulièrement les accessoires cuiseur vapeur pour chauffer et/ou cuire à la vapeur des aliments contenus dans un récipient.

La présente invention concerne également les appareils pour chauffer et/ou cuire à la vapeur des aliments, comportant un récipient associé à un dispositif de production de vapeur formant un tel accessoire cuiseur vapeur.

### Technique antérieure

Il est connu, du document FR 3 051 647 B1 déposé par la demanderesse, un accessoire cuiseur vapeur pour chauffer et/ou cuire à la vapeur des aliments contenus dans un récipient. L'accessoire cuiseur vapeur comprend une enceinte présentant une paroi latérale extérieure et une paroi de fond. L'accessoire cuiseur vapeur comprend un générateur de vapeur configuré pour alimenter l'enceinte en vapeur. Le générateur de vapeur présente une chambre de production de vapeur reliée à une sortie de distribution de vapeur ménagée dans une partie inférieure du générateur de vapeur. L'enceinte comporte un réservoir d'eau entourant et alimentant en eau la chambre de production de vapeur par une entrée d'alimentation d'eau. La chambre de production de vapeur communique avec une sortie d'évacuation de vapeur disposée plus haut que l'entrée d'alimentation d'eau. La chambre de production de vapeur comporte un dispositif de chauffe. L'enceinte comporte une première paroi latérale entourant le dispositif de chauffe et délimitant au moins partiellement la chambre de production de vapeur.

Cependant, un tel accessoire cuiseur vapeur présente l'inconvénient d'avoir une sortie d'évacuation de vapeur située au niveau du rebord supérieur de la première paroi latérale. Lorsque l'eau présente dans la chambre de production de vapeur est chauffée par le dispositif de chauffe, sa température augmente et atteint le point d'ébullition pour se transformer en vapeur. L'eau bouillante risque d'envoyer des petites projections d'eau vers les aliments contenus dans le récipient via la sortie d'évacuation de vapeur. La présence d'eau dans le récipient a pour conséquence d'altérer le résultat de cuisson et de faire perdre des vitamines dans les aliments.

### Exposé de l'invention

Un objet de la présente invention est de proposer un accessoire cuiseur vapeur utilisé avec un récipient pour chauffer et/ou cuire des aliments à la vapeur, dans lequel le résultat de cuisson est amélioré.

Un objet de la présente invention est de proposer un accessoire cuiseur vapeur utilisé avec un récipient pour chauffer et/ou cuire des aliments à la vapeur, dans lequel la perte vitaminique des aliments est limitée.

Un autre objet de la présente invention est de proposer un accessoire cuiseur vapeur utilisé avec un récipient pour chauffer et/ou cuire des aliments à la vapeur, qui présente de bonnes performances de production de vapeur.

Un autre objet de la présente invention est de proposer un cuiseur vapeur électrique pour chauffer et/ou cuire des aliments à la vapeur comportant un récipient et un accessoire cuiseur vapeur, dans lequel le résultat de cuisson est amélioré.

Un autre objet de la présente invention est de proposer un cuiseur vapeur électrique pour chauffer et/ou cuire des aliments à la vapeur comportant un récipient et un accessoire cuiseur vapeur, dans lequel la perte vitaminique des aliments est limitée.

Un autre objet de la présente invention est de proposer un cuiseur vapeur électrique pour chauffer et/ou cuire des aliments à la vapeur comportant un récipient et un accessoire cuiseur vapeur, qui présente de bonnes performances de production de vapeur.

### Résumé de l'invention

Ces objets sont atteints avec un accessoire cuiseur vapeur selon la revendication 1 pour chauffer et/ou cuire à la vapeur des aliments contenus dans un récipient.

Ainsi, lorsque l'eau présente dans la chambre de production de vapeur atteint son point d'ébullition, l'eau commence à bouillir et se transforme en vapeur d'eau. L'eau bouillante émet des projections d'eau à proximité de la surface d'eau vers la première paroi latérale. Le fait que la sortie d'évacuation de vapeur soit disposée dans l'enceinte à distance du sommet de la première paroi latérale présente l'avantage d'éviter aux projections d'eau de se diriger vers la sortie d'évacuation de vapeur.

Avantageusement, la sortie d'évacuation de vapeur est disposée à l'extérieur de la chambre de production de vapeur. Cette disposition permet d'éloigner la sortie d'évacuation de vapeur de la chambre de production de vapeur.

Avantageusement, la première paroi latérale porte une paroi séparatrice s'interposant entre la sortie d'évacuation de vapeur et la chambre de production de vapeur et s'étendant plus haut que la sortie d'évacuation de vapeur. Cette disposition présente l'avantage d'empêcher les projections d'eau en provenance de la chambre de production de vapeur vers la sortie d'évacuation de vapeur.

Avantageusement, l'enceinte comporte une deuxième paroi latérale entourant la première paroi latérale à distance de la paroi latérale extérieure. Ainsi, la deuxième paroi latérale forme une barrière thermique entre la première paroi latérale et la paroi latérale extérieure pour que l'échauffement du réservoir d'eau en dehors de la chambre de production de vapeur soit limité. La température de la paroi latérale extérieure de l'enceinte est donc limitée. Le volume d'eau en chauffe pour la production de vapeur est davantage réduit grâce à la présence de la deuxième paroi latérale. Le temps de montée en température de l'eau est ainsi réduit. Ce générateur de vapeur présente de bonnes performances de production de vapeur.

Avantageusement, la sortie d'évacuation de vapeur communique par un conduit avec la sortie de distribution de vapeur, la première paroi latérale s'étendant entre le dispositif de chauffe et le conduit, et la deuxième paroi latérale entoure le conduit. Ainsi, la vapeur produite dans la chambre de production de vapeur s'élève pour atteindre la sortie d'évacuation de vapeur, puis traverse le conduit pour atteindre la sortie de distribution de vapeur. Cette disposition permet de présenter un conduit disposé près de la chambre de production de vapeur, facilitant le cheminement de vapeur, tout en évitant les projections d'eau vers le conduit. Cette disposition présente également une construction compacte et simple à mettre en oeuvre.

Avantageusement, la chambre de production de vapeur communique avec la sortie d'évacuation de vapeur par une chambre de diffusion de vapeur disposée autour de la chambre de production de vapeur, la chambre de diffusion de vapeur étant délimitée par la première paroi latérale et la deuxième paroi latérale. Cette disposition permet de mieux contrôler le cheminement de vapeur depuis la chambre de production de vapeur vers la sortie d'évacuation de vapeur.

Avantageusement, la chambre de production de vapeur communique avec la chambre de diffusion de vapeur par une ouverture d'échappement de vapeur formée par la première paroi latérale. Cette disposition permet d'obtenir une construction simple et économique.

Avantageusement, la chambre de diffusion de vapeur présente au moins une zone d'écoulement de vapeur de section de passage réduite située entre la première paroi latérale et la deuxième paroi latérale, l'ouverture d'échappement de vapeur et la sortie d'évacuation de vapeur étant disposées respectivement en amont et en aval de la zone d'écoulement de vapeur. En effet, lorsque l'eau se transforme en vapeur, cette dernière forme une bulle de vapeur et s'entoure d'une fine couche d'eau liquide. La présence de la zone d'écoulement de vapeur de section de passage réduite permet de réduire la section de passage de la bulle de vapeur et oblige la bulle de vapeur à éclater avant d'atteindre la sortie d'évacuation de vapeur. Cette disposition permet d'éviter à des gouttelettes d'eau de rentrer dans le conduit. La réduction de passage au niveau de la zone d'écoulement de vapeur permet également d'accélérer le cheminement de vapeur pour faciliter l'éclatement de la bulle de vapeur.

Avantageusement, l'ouverture d'échappement de vapeur est disposée à l'opposé de la sortie d'évacuation de vapeur par rapport au dispositif de chauffe. Ainsi, l'ouverture d'échappement de vapeur est éloignée de la sortie d'évacuation de vapeur. Cela permet d'éviter aux projections d'eau de se diriger vers la sortie d'évacuation de vapeur. Cette disposition permet également de mieux contrôler le cheminement de vapeur depuis la chambre de production de vapeur vers la sortie d'évacuation de vapeur.

Avantageusement, la deuxième paroi latérale forme un tube de section sensiblement elliptique, et la première paroi latérale forme un tube de section sensiblement circulaire. Cette disposition présente une construction de générateur de vapeur économique et simple à mettre en oeuvre.

Avantageusement, la sortie d'évacuation de vapeur est disposée entre la première paroi latérale et la deuxième paroi latérale au voisinage d'une extrémité longitudinale de la deuxième paroi latérale de section sensiblement elliptique. Cette disposition présente une construction économique et simple à mettre en oeuvre.

Avantageusement, la distance entre la première paroi latérale et la deuxième paroi latérale adjacente selon une direction transversale est inférieure ou égale à 5 mm, de préférence inférieure ou égale à 3 mm. Cette disposition permet de garantir un éclatement efficace de la bulle de vapeur.

Avantageusement, l'enceinte comporte une troisième paroi latérale entourant la deuxième paroi latérale, et la troisième paroi latérale ménage une ouverture d'alimentation d'eau reliant le réservoir d'eau à la chambre de production de vapeur. Ainsi, cette troisième paroi latérale limite davantage l'échauffement du réservoir d'eau en dehors de la chambre de production de vapeur. Cette disposition permet également d'habiller la deuxième paroi latérale pour éviter que le générateur de vapeur soit exposé à l'extérieur.

Avantageusement, la première paroi latérale et la troisième paroi latérale sont réalisées en une seule pièce. Cette disposition permet d'obtenir une construction simple à mettre en oeuvre.

Ces objets sont également atteints avec un cuiseur vapeur électrique, comportant un récipient pour contenir les aliments à chauffer et/ou à cuire, et un accessoire cuiseur vapeur selon l'une au moins des caractéristiques précitées.

### Brève description des dessins

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 illustre une vue en perspective éclatée d'un cuiseur vapeur électrique comportant un accessoire cuiseur vapeur et un récipient selon un mode particulier de réalisation de l'invention ;
La figure 2 illustre une vue en coupe de l'accessoire cuiseur vapeur illustré sur la figure 1, selon une ligne de coupe II-II ;
La figure 3 illustre une vue en coupe de l'accessoire cuiseur vapeur illustré sur la figure 1, selon une ligne de coupe III-III perpendiculaire à la ligne de coupe II-II ;
La figure 4 illustre une vue en perspective d'un bouchon de l'accessoire cuiseur vapeur illustré sur la figure 1 ;
La figure 5 illustre une vue de dessous du bouchon illustré sur la figure 4 ;

### Description des modes de réalisation

Seuls les éléments nécessaires à la compréhension de l'invention ont été représentés. Pour faciliter la lecture des dessins, les mêmes éléments portent les mêmes références d'une figure à l'autre.

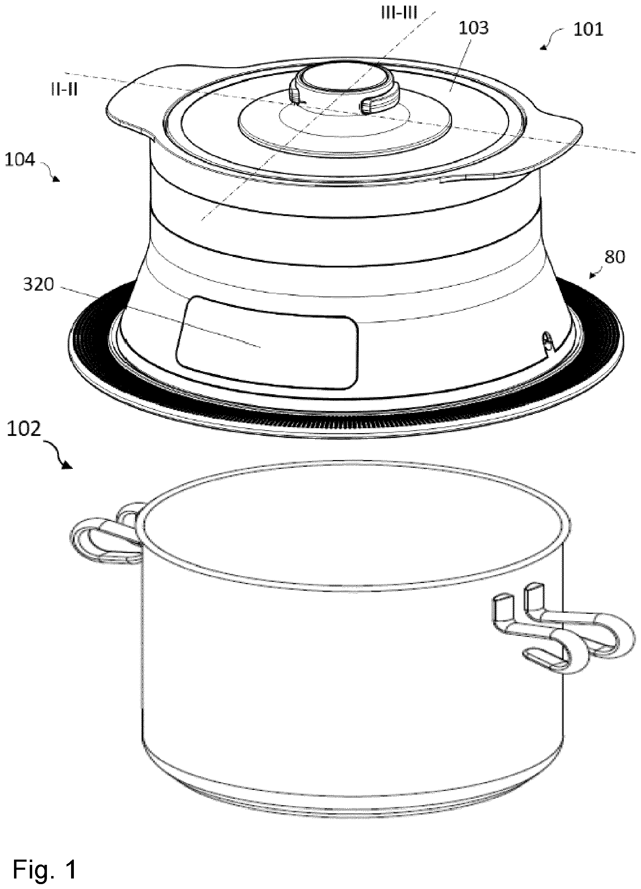

Le cuiseur vapeur électrique 101 illustré de manière schématique sur la figure 1 est un appareil pour chauffer et/ou cuire à la vapeur des aliments, comportant un récipient 102 pour contenir les aliments à chauffer et/ou à cuire, et un accessoire cuiseur vapeur 104 prévu pour reposer sur le récipient 102. A cet effet, l'accessoire 104 présente une face inférieure 81 prévue pour être disposée sur le récipient 102.

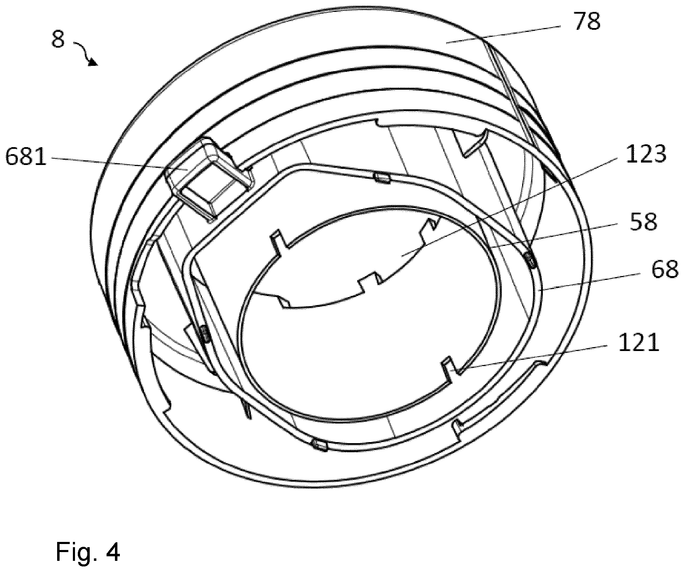

Plus particulièrement dans l'exemple de réalisation illustré sur les figures 1 à 4, l'accessoire cuiseur vapeur 104 est configuré pour chauffer et/ou cuire à la vapeur des aliments contenus dans le récipient 102. L'accessoire cuiseur vapeur 104 comporte un dispositif de support 80 prévu pour porter l'accessoire cuiseur vapeur 104, et pour reposer sur le récipient 102. La face inférieure 81 appartient au dispositif de support 80. A titre de variante, le dispositif de support 80 est monté amovible sur l'accessoire cuiseur vapeur 104.

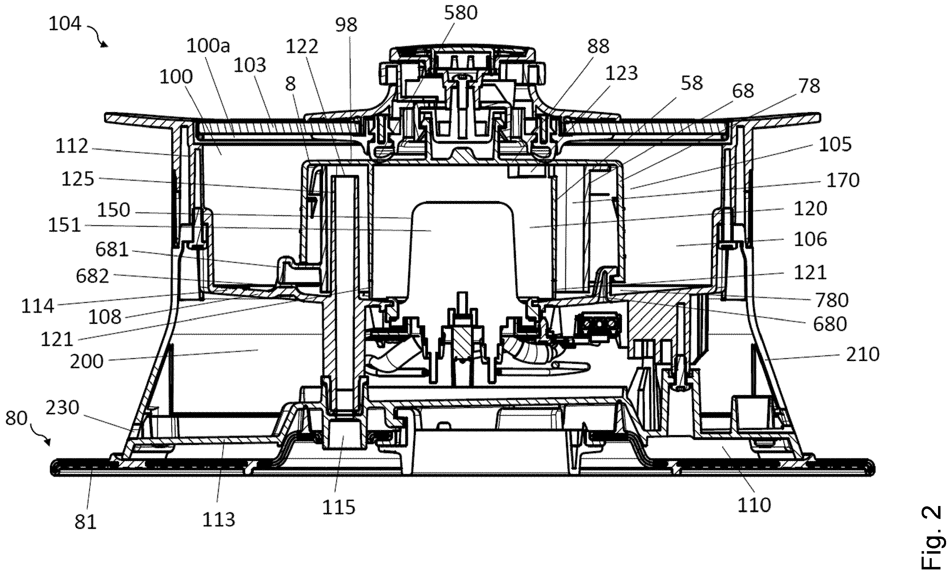

L'accessoire cuiseur vapeur 104 comprend une enceinte 100 présentant une paroi latérale extérieure 112 et une paroi de fond 114. L'enceinte 100 comporte un réservoir d'eau 106 délimité par la paroi latérale extérieure 112 et la paroi de fond 114. Le réservoir d'eau 106 communique avec l'extérieur par une ouverture supérieure 100a de l'enceinte 100. Tel que représenté sur la figure 2, l'accessoire cuiseur vapeur 104 comporte un couvercle 103 amovible qui ferme l'enceinte 100 au niveau de son ouverture supérieure 100a. Le couvercle 103 est mobile entre une position ouverte de l'enceinte 100 où le réservoir d'eau 106 est accessible depuis l'extérieur pour le remplissage d'eau et une position fermée de l'enceinte 100.

L'enceinte 100 comporte partiellement un générateur de vapeur 105 présentant une chambre de production de vapeur 120. Le réservoir d'eau 106 alimente en eau la chambre de production de vapeur 120 par gravité. A cet effet le réservoir d'eau 106 communique par une entrée d'alimentation d'eau 121 avec la chambre de production de vapeur 120. Dans l'exemple de réalisation illustré sur la figure 2, le réservoir d'eau 106 communique avec la chambre de production de vapeur 120 par deux entrées d'alimentation d'eau 121.

De préférence, le réservoir d'eau 106 présente un fond 108 déversant vers les deux entrées d'alimentation d'eau 121. Le fond 108 est formé par la paroi de fond 114 de l'enceinte 100.

Conformément aux figures 2 à 3, le réservoir d'eau 106 entoure la chambre de production de vapeur 120. A cet effet, l'enceinte 100 comporte une première paroi latérale 58 entourant la chambre de production de vapeur 120. Les deux entrées d'alimentation d'eau 121, mieux visibles sur la figure 2, forment chacune une échancrure inférieure au rebord inférieur de la première paroi latérale 58. Les deux entrées d'alimentation d'eau 121 sont disposées à l'opposé l'une de l'autre. Plus particulièrement, chaque entrée d'alimentation d'eau 121 présente une section de passage d'eau inférieure ou égale à 25 mm², de préférence inférieure ou égale à 20 mm². De préférence, la première paroi latérale 58 forme un tube de section sensiblement circulaire.

Tel que visible sur la figure 2, la chambre de production de vapeur 120 est délimitée en hauteur par une paroi centrale supérieure 88 reliée à la première paroi latérale 58. La première paroi latérale 58 s'étend depuis la paroi centrale supérieure 88 jusqu'au fond 108 du réservoir d'eau 106.

La chambre de production de vapeur 120 comporte un dispositif de chauffe 150 pour transformer en vapeur l'eau présente dans la chambre de production de vapeur 120. Dans l'exemple de réalisation illustré sur les figures 2 à 3, le dispositif de chauffe 150 comprend un plot chauffant 151. Selon un autre mode particulier de réalisation de l'invention, le dispositif de chauffe 150 peut notamment comporter un élément chauffant disposé sous une plaque de diffusion de chaleur et/ou dans une plaque de diffusion de chaleur formant au moins une partie du fond de la chambre de production de vapeur 120.

La chambre de production de vapeur 120 est reliée à une sortie de distribution de vapeur 115 ménagée dans une partie inférieure 110 du générateur de vapeur 105. A cet effet, la chambre de production de vapeur 120 communique avec une sortie d'évacuation de vapeur 122 disposée plus haut que l'entrée d'alimentation d'eau 121. La sortie d'évacuation de vapeur 122 communique par un conduit 125 avec la sortie de distribution de vapeur 115.

Avantageusement, la sortie d'évacuation de vapeur 122 est disposée dans l'enceinte 100 à distance du sommet de la première paroi latérale 58. La sortie d'évacuation de vapeur 122 est disposée à l'extérieur de la chambre de production de vapeur 120. Plus particulièrement la première paroi latérale 58 porte une paroi séparatrice 580 s'interposant entre la sortie d'évacuation de vapeur 122 et la chambre de production de vapeur 120 et s'étendant plus haut que la sortie d'évacuation de vapeur 122. Dans l'exemple de réalisation illustré à la figure 2, la paroi sépératrice 580 est formée par la première paroi latérale 58.

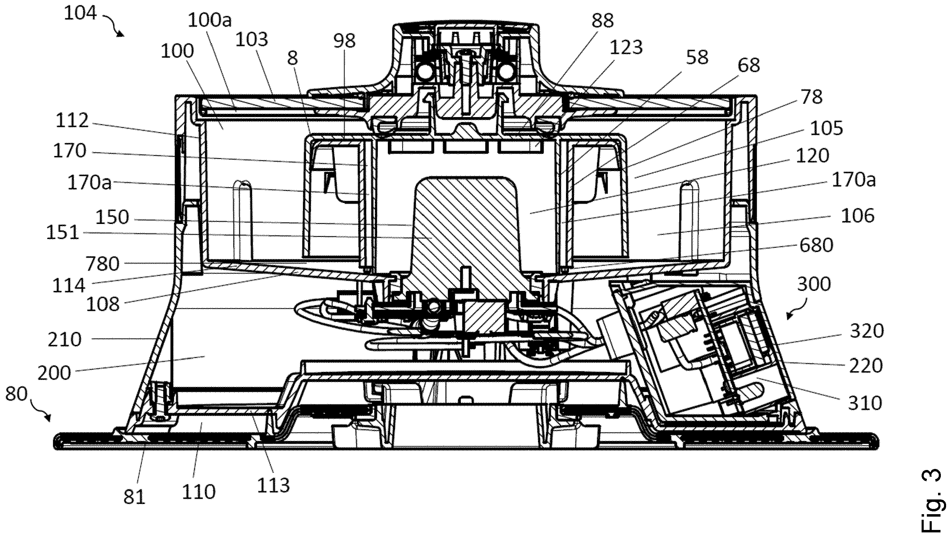

La chambre de production de vapeur 120 communique avec la sortie d'évacuation de vapeur 122 par une chambre de diffusion de vapeur 170 disposée autour de la chambre de production de vapeur 120. La chambre de production de vapeur 120 communique avec la chambre de diffusion de vapeur 170 par au moins une ouverture d'échappement de vapeur 123 formée par la première paroi latérale 58. Dans l'exemple de réalisation illustré sur la figure 3, la première paroi latérale 58 présente trois ouvertures d'échappement de vapeur 123 formant chacune une échancrure supérieure et disposées côte à côte dans le rebord supérieur de la première paroi latérale 58.

Le conduit 125 est disposé à l'intérieur de la chambre de diffusion de vapeur 170. Plus particulièrement, le conduit 125 est vertical. A titre de variante le conduit 125 peut être descendant sans nécessairement être vertical. De préférence le conduit 125 est dépourvu de chicanes. En d'autres termes, le conduit 125 est descendant de manière continue, sans nécessairement être rectiligne.

Le générateur de vapeur 105 présente une paroi inférieure 113 dans laquelle est formée la sortie de distribution de vapeur 115. La chambre de production de vapeur 120 est agencée dans le générateur de vapeur 105 à distance de la paroi inférieure 113.

L'accessoire cuiseur vapeur 104 comprend un compartiment technique 200 agencé en dessous de l'enceinte 100 et situé entre la paroi de fond 114 de l'enceinte 100 et la paroi inférieure 113. Tel que visible aux figures 1 à 3, le compartiment technique 200 présente une paroi annulaire extérieure 210 s'étendant depuis une partie de col cylindrique relativement étroite vers une extrémité inférieure relativement large. L'accessoire cuiseur vapeur 104 comporte un dispositif de commande et d'affichage 300 disposé dans le compartiment technique 200. Tel qu'illustré à la figure 3, le dispositif de commande et d'affichage 300 comporte un boîtier électronique de commande 310 présentant un écran de commande et d'affichage 320 qui est visible sur une face extérieure 220 de la paroi annulaire extérieure 210. Plus particulièrement, le dispositif de commande et d'affichage 300 est disposé à l'intérieur du compartiment technique 200 de manière hermétique et étanche, ce qui permet à la fois de garantir l'étanchéité des composants électroniques à l'intérieur du dispositif de commande et d'affichage 300 et d'éviter la condensation d'eau sur l'écran de commande et d'affichage 320.

De préférence, la paroi inférieure 113 est assemblée avec la paroi annulaire extérieure 210 et la paroi de fond 114, par exemple par vissage, par soudage, par clipsage ou par surmoulage.

Dans l'exemple de réalisation illustré sur la figure 2, l'accessoire cuiseur vapeur 104 comporte une sortie d'évacuation d'eau 230 ménagée entre la paroi annulaire extérieure 210 et la paroi inférieure 113 et mettant en communication l'intérieur du compartiment technique 200 et l'extérieur de l'accessoire cuiseur vapeur 104. La présence d'une telle sortie d'évacuation d'eau 230 permet d'évacuer de l'eau présente dans le compartiment technique 200 en cas de fuite d'eau dans l'enceinte 100. Avantageusement, la paroi inférieure 113 déverse vers la sortie d'évacuation d'eau 230.

La première paroi latérale 58 est montée amovible par rapport au dispositif de chauffe 150. Conformément aux figures 2 à 3, la paroi centrale supérieure 88 et la première paroi latérale 58 sont formées par un bouchon 8 entourant le dispositif de chauffe 150. Le bouchon 8 est mobile en rotation entre une position verrouillée dans laquelle la première paroi latérale 58 est immobile par rapport au dispositif de chauffe 150, et une position déverrouillée dans laquelle la première paroi latérale 58 peut être séparée du dispositif de chauffe 150. Plus particulièrement, Le bouchon 8 est maintenu sur la paroi de fond 114 par une liaison à baïonnette.

Tel que visible aux figures 2 à 3, l'enceinte 100 comporte une deuxième paroi latérale 68 entourant la première paroi latérale 58 à distance de la paroi latérale extérieure 112. La deuxième paroi latérale 68 est portée par le bouchon 8. La deuxième paroi latérale 68 ménage un passage d'alimentation d'eau 680 reliant le réservoir d'eau 106 et la chambre de production de vapeur 120. Le passage d'alimentation d'eau 680 est formé entre la deuxième paroi latérale 68 et le fond 108 du réservoir d'eau 106. Plus particulièrement, la deuxième paroi latérale 68 entoure le conduit 125. La première paroi latérale 58 s'étend entre le dispositif de chauffe 150 et le conduit 125. A titre de variante, la deuxième paroi latérale 68 est montée amovible par rapport au bouchon 8 pour faciliter le nettoyage du bouchon 8.

La chambre de diffusion de vapeur 170 est délimitée radialement entre la première paroi latérale 58 et la deuxième paroi latérale 68. La chambre de diffusion de vapeur 170 est fermée dans sa partie supérieure par une paroi intermédiaire supérieure 98. Avantageusement, la paroi intermédiaire supérieure 98 est formée par le bouchon 8 et relie à la paroi centrale supérieure 88.

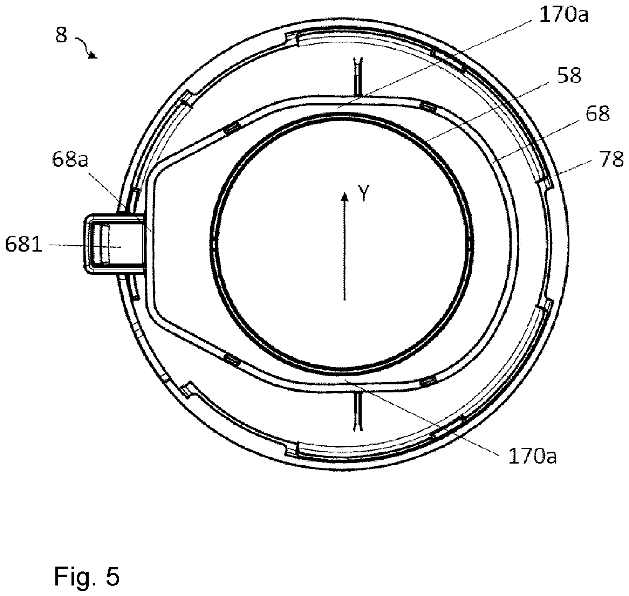

Tel que visible aux figures 3 à 5, la chambre de diffusion de vapeur 170 présente deux zones d'écoulement de vapeur 170a de section de passage réduite situées entre la première paroi latérale 58 et la deuxième paroi latérale 68. Les ouvertures d'échappement de vapeur 123 et la sortie d'évacuation de vapeur 122 sont disposées respectivement en amont et en aval des deux zones d'écoulement de vapeur 170a. Plus précisément, l'ouverture d'échappement de vapeur 123 est disposée à l'opposé de la sortie d'évacuation de vapeur 122 par rapport au dispositif de chauffe 150.

De préférence, la deuxième paroi latérale 68 forme un tube de section sensiblement elliptique. La sortie d'évacuation de vapeur 122 est disposée à l'intérieur de la chambre de diffusion de vapeur 170 au voisinage d'une extrémité longitudinale 68a de la deuxième paroi latérale 68 de section sensiblement elliptique. Les deux zones d'écoulement de vapeur 170a sont disposées à l'opposé l'une de l'autre selon une direction transversale Y. La distance entre la première paroi latérale 58 et la deuxième paroi latérale 68 adjacente au niveau des zones d'écoulement de vapeur 170a est inférieure ou égale à 5 mm, de préférence inférieure ou égale à 3 mm.

Le bouchon 8 comporte une troisième paroi latérale 78 entourant la deuxième paroi latérale 68 et reliée à la paroi intermédiaire supérieure 98. La troisième paroi latérale 78 ménage une ouverture d'alimentation d'eau 780 reliant le réservoir d'eau 106 et la chambre de production de vapeur 120. De préférence, la troisième paroi latérale 78 forme un tube de section sensiblement circulaire.

Avantageusement, la deuxième paroi latérale 68 est pivotante par rapport au bouchon 8. Tel que visible à la figure 2, l'enceinte 100 comporte un organe de positionnement 681 s'étendant depuis la deuxième paroi latérale 68 au-delà de la troisième paroi latérale 78. Lorsque le bouchon 8 est disposé dans l'enceinte 100, l'organe de positionnement 681 coopère avec un organe de blocage 682 disposé sur le fond 108 du réservoir d'eau 106 de manière à bloquer la rotation de la deuxième paroi latérale 68 dans l'enceinte 100.

Le cuiseur vapeur électrique 101 illustré sur la figure 1 et l'accessoire cuiseur vapeur 104 illustré sur les figures 1 à 4 fonctionnent et s'utilisent de la manière suivante.

L'utilisateur dispose l'accessoire cuiseur vapeur 104 sur le récipient 102 après avoir disposé les aliments dans le récipient 102. L'utilisateur enlève le couvercle 103 et remplit le réservoir d'eau 106 par l'ouverture supérieure 100a de l'enceinte 100. L'eau s'écoule par les deux entrées d'alimentation d'eau 121 dans la chambre de production de vapeur 120. De préférence, l'utilisateur remplit le réservoir d'eau 106 jusqu'à un niveau suffisamment inférieur à la sortie d'évacuation de vapeur 122, pour éviter que l'eau atteigne la sortie d'évacuation de vapeur 122 et s'écoule par le conduit 125. L'utilisateur met alors en marche le dispositif de chauffe 150 en appuyant sur l'écran de commande et d'affichage 320. La température de l'eau présente dans la chambre de production de vapeur 120 s'élève jusqu'à ce que de la vapeur soit produite. Cette dernière forme des bulles de vapeur et chaque bulle de vapeur s'entoure d'une fine couche d'eau liquide. Les bulles de vapeur traversent alors les trois ouvertures d'échappement de vapeur 123 pour atteindre la chambre de diffusion de vapeur 170.

Les bulles de vapeur sortant des ouvertures d'échappement de vapeur 123 s'écoulent vers la sortie d'évacuation de vapeur 122 en passant par les deux zones d'écoulement de vapeur 170a. La réduction de section de passage au niveau des deux zones d'écoulement de vapeur 170a permet à la fois d'éclater les bulles de vapeur pour libérer la vapeur de sa fine couche d'eau liquide avant d'arriver à la sortie d'évacuation de vapeur 122, et d'accélérer le flux de vapeur vers la sortie d'évacuation de vapeur 122. La vapeur s'échappe ensuite par la sortie d'évacuation de vapeur 122 pour atteindre la sortie de distribution de vapeur 115 en descendant par le conduit 125. La vapeur sortant de la sortie de distribution de vapeur 115 se répand dans le récipient 102 pour chauffer et/ou cuire les aliments.

Bien entendu, l'invention n'est nullement limitée au mode de réalisation précédemment décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation de l'invention non représentée, la première paroi latérale 58 et la deuxième paroi latérale 68 ne sont pas réalisées par une seule pièce.

Dans une variante de réalisation de l'invention non représentée, la chambre de production de vapeur 120 communique avec plusieurs sorties d'évacuation de vapeur 122 disposées plus haut que l'entrée d'alimentation d'eau 121 et communiquant par plusieurs conduits 125 avec plusieurs sorties de distribution de vapeur 115.

Dans une variante de réalisation de l'invention non représentée, les zones d'écoulement de vapeur 170a de section de passage réduite sont formées par des chicanes disposées entre la première paroi latérale 58 et la deuxième paroi latérale 68.

## Revendications

1. Accessoire cuiseur vapeur (104) pour chauffer et/ou cuire à la vapeur des aliments contenus dans un récipient (102), l'accessoire cuiseur vapeur (104) comprenant une enceinte (100) présentant une paroi latérale extérieure (112) et une paroi de fond (114), un générateur de vapeur (105) configuré pour alimenter l'enceinte (100) en vapeur, le générateur de vapeur (105) présentant une chambre de production de vapeur (120) reliée à une sortie de distribution de vapeur (115) ménagée dans une partie inférieure (110) du générateur de vapeur (105), l'enceinte (100) comportant un réservoir d'eau (106) entourant et alimentant en eau la chambre de production de vapeur (120) par au moins une entrée d'alimentation d'eau (121), la chambre de production de vapeur (120) communiquant avec une sortie d'évacuation de vapeur (122) disposée plus haut que l'entrée d'alimentation d'eau (121), la chambre de production de vapeur (120) comportant un dispositif de chauffe (150), l'enceinte (100) comportant une première paroi latérale (58) entourant le dispositif de chauffe (150) et délimitant au moins partiellement la chambre de production de vapeur (120), **caractérisé en ce que** la sortie d'évacuation de vapeur (122) est disposée dans l'enceinte (100) à distance du sommet de la première paroi latérale (58).

2. Accessoire cuiseur vapeur (104) selon la revendication 1, **caractérisé en ce que** la sortie d'évacuation de vapeur (122) est disposée à l'extérieur de la chambre de production de vapeur (120)

3. Accessoire cuiseur vapeur (104) selon l'une des revendications 1 à 2, **caractérisé en ce que** la première paroi latérale (58) porte une paroi séparatrice (580) s'interposant entre la sortie d'évacuation de vapeur (122) et la chambre de production de vapeur (120) et s'étendant plus haut que la sortie d'évacuation de vapeur (122).

4. Accessoire cuiseur vapeur (104) selon l'une des revendications 1 à 3, **caractérisé en ce que** l'enceinte (100) comporte une deuxième paroi latérale (68) entourant la première paroi latérale (58) à distance de la paroi latérale extérieure (112).

5. Accessoire cuiseur vapeur (104) selon la revendication 4, **caractérisé en ce que** la sortie d'évacuation de vapeur (122) communique par un conduit (125) avec la sortie de distribution de vapeur (115), la première paroi latérale (58) s'étendant entre le dispositif de chauffe (150) et le conduit (125), et **en ce que** la deuxième paroi latérale (68) entoure le conduit (125).

6. Accessoire cuiseur vapeur (104) selon l'une des revendications 4 à 5, **caractérisé en ce que** la chambre de production de vapeur (120) communique avec la sortie d'évacuation de vapeur (122) par une chambre de diffusion de vapeur (170) disposée autour de la chambre de production de vapeur (120), la chambre de diffusion de vapeur (170) étant délimitée par la première paroi latérale (58) et la deuxième paroi latérale (68).

7. Accessoire cuiseur vapeur (104) selon la revendication 6, **caractérisé en ce que** la chambre de production de vapeur (120) communique avec la chambre de diffusion de vapeur (170) par une ouverture d'échappement de vapeur (123) formée par la première paroi latérale (58).

8. Accessoire cuiseur vapeur (104) selon la revendication 7, **caractérisé en ce que** la chambre de diffusion de vapeur (170) présente au moins une zone d'écoulement de vapeur (170a) de section de passage réduite située entre la première paroi latérale (58) et la deuxième paroi latérale (68), l'ouverture d'échappement de vapeur (123) et la sortie d'évacuation de vapeur (122) étant disposées respectivement en amont et en aval de la zone d'écoulement de vapeur (170a).

9. Accessoire cuiseur vapeur (104) selon l'une des revendications 7 à 8, **caractérisé en ce que** l'ouverture d'échappement de vapeur (123) est disposée à l'opposé de la sortie d'évacuation de vapeur (122) par rapport au dispositif de chauffe (150).

10. Accessoire cuiseur vapeur (104) selon l'une des revendications 4 à 9, **caractérisé en ce que** la deuxième paroi latérale (68) forme un tube de section sensiblement elliptique, et **en ce que** la première paroi latérale (58) forme un tube de section sensiblement circulaire.

11. Accessoire cuiseur vapeur (104) selon la revendication 10, **caractérisé en ce que** la sortie d'évacuation de vapeur (122) est disposée entre la première paroi latérale (58) et la deuxième paroi latérale (68) au voisinage d'une extrémité longitudinale (68a) de la deuxième paroi latérale (68) de section sensiblement elliptique.

12. Accessoire cuiseur vapeur (104) selon la revendication 11, **caractérisé en ce que** la distance entre la première paroi latérale (58) et la deuxième paroi latérale (68) adjacente selon une direction transversale (Y) est inférieure ou égale à 5 mm, de préférence inférieure ou égale à 3 mm.

13. Accessoire cuiseur vapeur (104) selon l'une des revendications 4 à 12, **caractérisé en ce que** l'enceinte (100) comporte une troisième paroi latérale (78) entourant la deuxième paroi latérale (68), et **en ce que** la troisième paroi latérale (78) ménage une ouverture d'alimentation d'eau (780) reliant le réservoir d'eau (106) à la chambre de production de vapeur (120).

14. Accessoire cuiseur vapeur (104) selon la revendication 13, **caractérisé en ce que** la première paroi latérale (58) et la troisième paroi latérale (78) sont réalisées en une seule pièce.

15. Cuiseur vapeur électrique (101), **caractérisé en ce qu'**il comporte un accessoire cuiseur vapeur (104) selon l'une des revendications 1 à 14, et un récipient (102) pour contenir les aliments à chauffer et/ou à cuire.

## Patentansprüche

1. Dampfkocherzubehör (104) zum Erwärmen und/oder Kochen von Lebensmitteln mit Dampf, die in einem Behälter (102) enthalten sind, wobei das Dampfkocherzubehör (104) ein Gehäuse (100) umfasst, das eine äußere Seitenwand (112) und eine Bodenwand (114) aufweist, einen Dampfgenerator (105), der konfiguriert ist, um das Gehäuse (100) mit Dampf zu versorgen, wobei der Dampfgenerator (105) eine Dampfproduktionskammer (120) aufweist, die mit einem Dampfverteilungsausgang (115) verbunden ist, der in einem unteren Teil (110) des Dampfgenerators (105) vorgesehen ist, wobei das Gehäuse (100) ein Wasserreservoir (106) umfasst, das die Dampfproduktionskammer (120) umgibt und durch mindestens einen Wasserversorgungseingang (121) mit Wasser versorgt, wobei die Dampfproduktionskammer (120) mit einem Dampfaustragsausgang (122) verbunden ist, der höher als der Wasserversorgungseingang (121) angeordnet ist, wobei die Dampfproduktionskammer (120) eine Heizvorrichtung (150) umfasst, das Gehäuse (100) eine erste Seitenwand (58) umfasst, welche die Heizvorrichtung (150) umgibt und die Dampfproduktionskammer (120) mindestens teilweise begrenzt, **dadurch gekennzeichnet, dass** der Dampfaustragsausgang (122) im Gehäuse (100) im Abstand zum Scheitel der ersten Seitenwand (58) angeordnet ist.

2. Dampfkocherzubehör (104) nach Anspruch 1, **dadurch gekennzeichnet, dass** der Dampfaustragsausgang (122) außerhalb der Dampfproduktionskammer (120) angeordnet ist.

3. Dampfkocherzubehör (104) nach einem der Ansprüche 1 bis 2, **dadurch gekennzeichnet, dass** die erste Seitenwand (58) eine Trennwand (580) trägt, die sich zwischen den Dampfaustragsausgang (122) und die Dampfproduktionskammer (120) legt und sich höher erstreckt, als der Dampfaustragsausgang (122).

4. Dampfkocherzubehör (104) nach einem der Ansprüche 1 bis 3, **dadurch gekennzeichnet, dass** das Gehäuse (100) eine zweite Seitenwand (68) umfasst, welche die erste Seitenwand (58) im Abstand zur äußeren Seitenwand (112) umgibt.

5. Dampfkocherzubehör (104) nach Anspruch 4, **dadurch gekennzeichnet, dass** der Dampfaustragsausgang (122) über eine Leitung (125) mit dem Dampfverteilungsausgang (115) verbunden ist, sich die erste Seitenwand (58) zwischen der Heizvorrichtung (150) und der Leitung (125) erstreckt, und dadurch, dass die zweite Seitenwand (68) die Leitung (125) umgibt.

6. Dampfkocherzubehör (104) nach einem der Ansprüche 4 bis 5, **dadurch gekennzeichnet, dass** die Dampfproduktionskammer (120) mit dem Dampfaustragsausgang (122) über eine Dampfausbreitungskammer (170) verbunden ist, die um die Dampfproduktionskammer (120) herum angeordnet ist, wobei die Dampfausbreitungskammer (170) durch die erste Seitenwand (58) und die zweite Seitenwand (68) begrenzt ist.

7. Dampfkocherzubehör (104) nach Anspruch 6, **dadurch gekennzeichnet, dass** die Dampfproduktionskammer (120) mit der Dampfausbreitungskammer (170) über eine Dampfauslassöffnung (123) verbunden ist, die durch die erste Seitenwand (58) gebildet wird.

8. Dampfkocherzubehör (104) nach Anspruch 7, **dadurch gekennzeichnet, dass** die Dampfausbreitungskammer (170) mindestens eine Dampfströmungszone (170a) mit einem verringerten Querschnitt aufweist, die sich zwischen der ersten Seitenwand (58) und der zweiten Seitenwand (68) befindet, wobei die Dampfauslassöffnung (123) und die Dampfaustragsöffnung (122) jeweils stromaufwärts oder stromabwärts der Dampfströmungszone (170a) befindet.

9. Dampfkocherzubehör (104) nach einem der Ansprüche 7 bis 8, **dadurch gekennzeichnet, dass** die Dampfauslassöffnung (123) in Bezug auf die Heizvorrichtung (150) entgegengesetzt zur Dampfaustragsöffnung (122) angeordnet ist.

10. Dampfkocherzubehör (104) nach einem der Ansprüche 4 bis 9, **dadurch gekennzeichnet, dass** die zweite Seitenwand (68) ein Rohr mit im Wesentlichen elliptischem Querschnitt bildet, und dadurch, dass die erste Seitenwand (58) ein Rohr mit im Wesentlichen kreisförmigem Querschnitt bildet.

11. Dampfkocherzubehör (104) nach Anspruch 10, **dadurch gekennzeichnet, dass** der Dampfaustragsausgang (122) zwischen der ersten Seitenwand (58) und der zweiten Seitenwand (68) benachbart zu einem Längsende (68a) der zweiten Seitenwand (68) mit im Wesentlichen elliptischem Querschnitt angeordnet ist.

12. Dampfkocherzubehör (104) nach Anspruch 11, **dadurch gekennzeichnet, dass** der Abstand zwischen der ersten Seitenwand (58) und der in einer Querrichtung (Y) angrenzenden zweiten Seitenwand (68) kleiner oder gleich 5 mm, vorzugsweise kleiner oder gleich 3 mm ist.

13. Dampfkocherzubehör (104) nach einem der Ansprüche 4 bis 12, **dadurch gekennzeichnet, dass** das Gehäuse (100) eine dritte Seitenwand (78) umfasst, welche die zweite Seitenwand (68) umgibt, und dadurch, dass die dritte Seitenwand (78) eine Wasserversorgungsöffnung (780) vorsieht, welche das Wasserreservoir (106) mit der Dampfproduktionskammer (120) verbindet.

14. Dampfkocherzubehör (104) nach Anspruch 13, **dadurch gekennzeichnet, dass** die erste Seitenwand (58) und die dritte Seitenwand (78) in einem Stück gefertigt sind.

15. Elektrischer Dampfkocher (101), **dadurch gekennzeichnet, dass** es ein Dampfkocherzubehör (104) nach einem der Ansprüche 1 bis 14, und einen Behälter (102) umfasst, um die zu erwärmenden und/oder zu kochenden Lebensmittel zu enthalten.

## Claims

1. Steam cooker accessory (104) for heating and/or steaming food contained in a receptacle (102), the steam cooker accessory (104) comprising an enclosure (100) having an outer side wall (112) and a bottom wall (114), a steam generator (105) configured to supply steam to the enclosure (100), the steam generator (105) having a steam-generating chamber (120) connected to a steam-dispensing outlet (115) provided in a lower portion (110) of the steam generator (105), the enclosure (100) comprising a water tank (106) surrounding and supplying water to the steam-generating chamber (120) through at least one water supply inlet (121), the steam-generating chamber (120) communicating with a steam discharge outlet (122) arranged higher than the water supply inlet (121), the steam-generating chamber (120) comprising a heating device (150), the enclosure (100) comprising a first side wall (58) surrounding the heating device (150) and at least partially delimiting the steam-generating chamber (120), **characterised in that** the steam discharge outlet (122) is arranged in the enclosure (100) at a distance from the top of the first side wall (58).

2. Steam cooker accessory (104) according to claim 1, **characterised in that** the steam discharge outlet (122) is arranged outside the steam-generating chamber (120).

3. Steam cooker accessory (104) according to any one of claims 1 to 2, **characterised in that** the first side wall (58) supports a separating wall (580) positioned between the steam discharge outlet (122) and the steam-generating chamber (120) and extending higher than the steam discharge outlet (122).

4. Steam cooker accessory (104) according to any one of claims 1 to 3, **characterised in that** the enclosure (100) comprises a second side wall (68) surrounding the first side wall (58) at a distance from the outer side wall (112).

5. Steam cooker accessory (104) according to claim 4, **characterised in that** the steam discharge outlet (122) communicates via a duct (125) with the steam-dispensing outlet (115), the first side wall (58) extending between the heating device (150) and the duct (125), and **in that** the second side wall (68) surrounds the duct (125).

6. Steam cooker accessory (104) according to any one of claims 4 to 5, **characterised in that** the steam-generating chamber (120) communicates with the steam discharge outlet (122) through a steam diffusion chamber (170) arranged around the steam-generating chamber (120), the steam diffusion chamber (170) being delimited by the first side wall (58) and the second side wall (68).

7. Steam cooker accessory (104) according to claim 6, **characterised in that** the steam-generating chamber (120) communicates with the steam diffusion chamber (170) through a steam exhaust opening (123) formed by the first side wall (58).

8. Steam cooker accessory (104) according to claim 7, **characterised in that** the steam diffusion chamber (170) has at least one steam flow region (170a) with a reduced passage cross-section located between the first side wall (58) and the second side wall (68), the steam exhaust opening (123) and the steam discharge outlet (122) being arranged upstream and downstream, respectively, of the steam flow region (170a).

9. Steam cooker accessory (104) according to any one of claims 7 to 8, **characterised in that** the steam exhaust opening (123) is arranged opposite the steam discharge outlet (122) with respect to the heating device (150).

10. Steam cooker accessory (104) according to any one of claims 4 to 9, **characterised in that** the second side wall (68) forms a tube of substantially elliptical cross-section, and **in that** the first side wall (58) forms a tube of substantially circular cross-section.

11. Steam cooker accessory (104) according to claim 10, **characterised in that** the steam discharge outlet (122) is arranged between the first side wall (58) and the second side wall (68) in the vicinity of a longitudinal end (68a) of the second side wall (68) of substantially elliptical cross-section.

12. Steam cooker accessory (104) according to claim 11, **characterised in that** the distance between the first side wall (58) and the second side wall (68), which is adjacent in a transverse direction (Y), is less than or equal to 5 mm, preferably less than or equal to 3 mm.

13. Steam cooker accessory (104) according to any one of claims 4 to 12, **characterised in that** the enclosure (100) comprises a third side wall (78) surrounding the second side wall (68), and **in that** the third side wall (78) provides a water supply opening (780) connecting the water tank (106) to the steam-generating chamber (120).

14. Steam cooker accessory (104) according to claim 13, **characterised in that** the first side wall (58) and the third side wall (78) are made in a single piece.

15. Electric steam cooker (101), **characterised in that** it comprises a steam cooker accessory (104) according to any one of claims 1 to 14, and a receptacle (102) for containing the food to be heated and/or cooked.
